# FASCICULE DE BREVET EUROPEEN

(11) **EP 0 745 358 B1**
(45) Date de publication et mention de la délivrance du brevet: **08.12.1999**
(21) Numéro de dépôt: 96106898.8
(22) Date de dépôt: 02.05.1996
(51) Int. Cl.: A61C 1/18, A61C 1/05, A61C 1/06

(54) **Attachement polyvalent destiné à connecter différents types d'instruments dentaires**
Vielfältig verwendbare Verbindung zum Anschluss verschiedener Typen von zahnärztlichen Instrumenten
Multi-purpose attachment for connecting different types of dental instruments

(30) Priorité: 05.05.1995 FR 9505413
(43) Date de publication de la demande: 04.12.1996
(73) Titulaire: BIEN-AIR SA, CH-2504 Bienne (CH)
(72) Inventeur: Mosimann, Vincent, 2533 Evilard (CH)
(74) Mandataire: Patry, Didier Marcel Pierre

(56) Documents cités:
- EP-A- 0 393 364
- CH-A- 676 081
- DE-A- 2 549 177
- GB-A- 2 118 836

## Description

La présente invention concerne un attachement polyvalent destiné à connecter, a une source d'alimentation, différents types d'instruments dentaires, tels que notamment une turbine, un raccord de turbine, un moteur électrique pour un contre-angle ou une pièce à main, ou encore d'autres instruments.

La présente invention concerne également un instrument dentaire, tel qu'un moteur électrique pour contre-angle ou pièce à main, prévu pour venir se connecter sur un attachement du type susmentionné.

Cette invention concerne également un équipement dentaire comportant un tel attachement et un tel instrument.

Les installations dentaires classiques qui sont utilisées par les praticiens pour les opérations diverses de traitement des dents, sont généralement constituées d'une source d'alimentation qui est appelée plus généralement par le terme "unit" et qui est capable de fournir les agents et l'énergie nécessaires auxdites opérations.

Ces installations comportent en outre plusieurs tuyaux d'alimentation dont une extrémité est connectée à la source d'alimentation, tandis que l'autre extrémité est quant à elle destinée à venir se raccorder sur l'arrière d'un certain nombre d'instruments dentaires disponibles sur un présentoir.

Chaque tuyau d'alimentation se termine donc à son extrémité libre par une prise que le praticien peut venir brancher, puis visser, à l'arrière des instruments dentaires qui sont compatibles avec ce type de prise.

L'ensemble constitué de la prise et du tuyau d'alimentation est appelé "attachement" et c'est sous cette appellation qu'il sera désigné dans le texte de la présente demande.

Le brevet CH 676 081, qui forme la base pour le préambule des revendications 1 et 4, décrit une prise d'un tel attachement comportant quatre voies de transport d'un fluide et quatre voies d'alimentation électrique. Ce type de prise est donc appelé prise 4 x 4 électrifiée.

On a représenté à la figure 1 un équipement dentaire de construction classique, tel que celui décrit dans le brevet susmentionné afin de mieux illustrer le problème posé dans la présente demande.

Cet équipement dentaire comporte un instrument 1 constitué ici par une turbine, comportant à une de ses extrémités une tête 2 qui est agencée pour recevoir un outil, ici non représenté.

A l'arrière de l'instrument dentaire 1, et plus particulièrement à l'arrière de son manche 4, est engagé un raccord tournant amovible 6 qui comporte à sa périphérie deux boutons d'actionnement extérieurs 8 permettant, par pression radiale sur ceux-ci, de libérer le manche 4 de l'instrument 1 et de remplacer ce type de turbine par une autre turbine, ici non représentée.

On précisera que ce type de raccord permet en outre à l'instrument dentaire 1 de pivoter autour de son axe longitudinal pour permettre au praticien d'orienter l'instrument 1 dans n'importe quelle position afin d'amener l'outil sur une zone de travail spécifique, sans déplacement correspondant du tuyau d'alimentation, référencé 10.

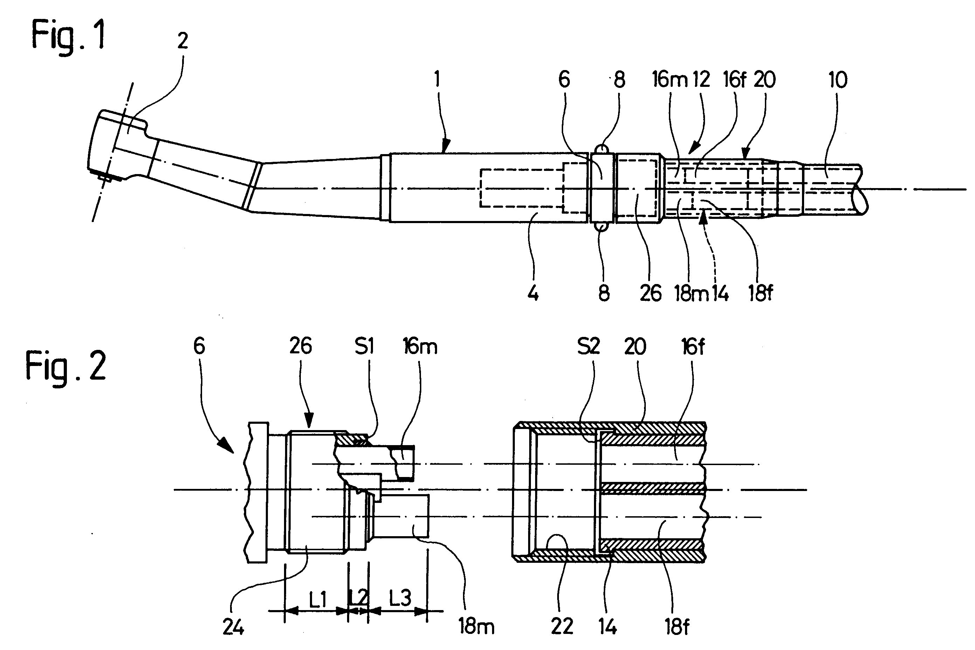

Comme on le voit sur la figure 1, le raccord 6 est connecté à un attachement 12 qui, d'une part, comprend le tuyau d'alimentation 10 relié à la source d'alimentation, non représentée, et qui, d'autre part, comprend une prise 14 (figure 2) à l'intérieur de laquelle sont disposés des éléments femelles de connexion comprenant des conduits de transport de fluide ainsi que des contacts électriques.

Cette prise 14 forme ici la partie femelle du dispositif de connexion entre l'instrument dentaire 1 et l'attachement 12.

On a uniquement représenté sur la figure 1, en traits interrompus, deux conduits de transport de fluide respectivement 16f et 18f permettant, pour le premier, de fournir de l'air moteur pour l'entraînement de la turbine 1, et, pour le second, d'assurer l'évacuation de l'air d'échappement vers l'arrière de l'attachement, et plus particulièrement en direction de la source d'alimentation.

A cet effet, le raccord 6 comporte quant à lui deux éléments de connexion mâles correspondants, référencés respectivement 16m et 18m, destinés à venir s'engager dans les éléments de connexion femelles respectivement 16f et 18f.

L'attachement 12 comporte en outre un manchon de fixation tournant 20 dans lequel est ménagé, à son extrémité, un filetage intérieur 22 (figure 2) qui est agencé pour venir se visser sur un filetage extérieur 24 prévu sur la partie arrière 26 du raccord 6, qui forme la partie mâle de ce dispositif de connexion.

Ce type d'agencement est aujourd'hui normalisé par une norme référencée ISO 9168.

On a reproduit à la figure 2 les dessins de la partie mâle 26 du raccord 6 et de la prise femelle 14 de l'attachement 12 sous leur forme normalisée pour mieux comprendre quels sont les impératifs techniques que les fabricants d'instruments dentaires doivent respecter pour fabriquer et vendre leurs produits.

Comme on le voit sur cette figure, les éléments de connexion mâles 16m et 18m font saillies d'une surface frontale S1 de la partie mâle 26 du raccord 6, et le filetage extérieur 24 est ménagé sur une paroi extérieure de cette partie 26.

On voit également, sur cette figure 2, les éléments de connexion femelles qui comprennent les conduits de transport de fluide respectivement 16f et 18f dans lesquels doivent venir s'engager les éléments de connexion mâles respectivement 16m et 18m. Ces éléments de connexion femelle 16f et 18f débouchent sur une surface frontale S2 ménagée à l'extrémité libre de la prise 14.

On remarque également, sur cette figure 2, le manchon 20 ainsi que son filetage intérieur 22 qui est destiné à venir se fixer sur le filetage extérieur 24.

On voit donc que le filetage 22 et la partie du manchon qui le supporte que l'on appelle aussi "écrou de l'attachement" font saillie de la surface frontale S2 de la prise 14 de sorte que les deux surfaces frontales respectivement S1 et S2 appartenant, d'une part, au raccord 6, et d'autre part à la prise 14, peuvent venir en contact lorsque les filets du filetage 22 de l'attachement 12 sont en prise avec les filets du filetage 24 du raccord 6.

On précisera ici que ce type de construction normalisée a été adapté sur les raccords tournants de turbines, ainsi que sur des turbines ayant des dispositifs de connexion arrière fixes.

Cette construction normalisée est donc figée et les constructeurs d'instruments dentaires doivent s'y conformer de façon impérative.

Or, on constate aujourd'hui, qu'à côté de ce type de construction normalisée, il existe dans les installations dentaires d'autres dispositifs de connexion qui ne répondent pas à cette norme. C'est le cas notamment de la connexion arrière (non représentée) entre les moteurs électriques qui équipent des pièces à main ou contre-angles et des attachements correspondants, non normalisés. Ces pièces à main ou contre-angle se déférentient essentiellement des turbines en ce que l'outil n'est pas entraîné par le gaz moteur fourni par la source d'alimentation, mais par un arbre d'entraînement mécanique qui est logé à l'intérieur de l'instrument et qui est entraîné en rotation par le moteur électrique qui reçoit son énergie depuis les contacts électriques de la source d'alimentation, de même via ledit attachement.

Le but que l'invention cherche à atteindre est de rendre, dans la mesure du possible, compatibles les attachements normalisés, tels que l'attachement 12 des figures 1 et 2, avec les éléments de connexion mâles et les éléments de fixation arrière des moteurs électriques pour contre-angle ou pièce à main.

Cette rationalisation des attachements permettrait bien entendu de fournir des installations ayant des sources d'alimentation plus homogènes, mais aussi d'augmenter les possibilités de permutation des types d'instruments utilisables par le praticien, sur une même installation.

Une première solution pourrait consister à fournir des jeux d'attachements intermédiaires dont une extrémité pourrait se connecter sur les attachements normalisés qui sont en place sur la source d'alimentation, et dont l'autre extrémité pourrait venir se connecter à l'arrière du ou des instruments dentaires, non normalisés.

Après avoir été analysée de façon très détaillée, on s'est rendu compte que cette solution était coûteuse et qu'elle ne répondait pas aux critères économiques imposés dans ce type d'industrie.

D'un autre côté, on a constaté que l'adaptation pure et simple d'un dispositif de connexion normalisé, tel que celui de la figure 2, à l'arrière d'un moteur électrique amenait un inconvénient majeur qui est l'augmentation de la longueur totale de l'instrument.

En effet, comme on le voit à la figure 2, l'arrière normalisé du raccord 6 impose d'avoir un filetage 24 s'étendant sur une première longueur L1 de 8 mm puis d'avoir une longueur libre L2 de 4 mm, cette longueur libre L2 étant délimitée par la surface frontale S1 de laquelle doivent faire saillie, de même sur une longueur L3 imposée, les éléments de connexion mâles notamment 16m et 18m.

Ainsi, l'adoption "directe" de cet agencement normalisé à l'arrière d'un moteur électrique, non normalisé, aurait pour conséquence de prolonger de plusieurs millimètres la longueur de ce moteur que l'on cherche généralement à réduire car ce moteur électrique, en venant se brancher sur l'arrière d'un contre-angle ou d'une pièce à main, forme un ensemble beaucoup trop long pour le praticien.

En effet, comme cet ensemble - moteur électrique et pièce à main - est déjà très long, l'attachement qui vient se connecter à l'arrière de celui-ci pend dans le vide lors des opérations de traitement et du fait de la longueur de l'ensemble, le tuyau d'alimentation constitue, par son poids, un couple résistant qui limite considérablement la maniabilité du tout et handicape les manoeuvres du praticien.

On se rend donc compte que l'adaptation pure et simple de la partie mâle du dispositif de connexion normalisé (figure 2) n'est pas envisageable à l'arrière d'un moteur électrique destiné à venir se brancher sur un contre-angle ou une pièce à main.

La présente invention à donc pour but de répondre à ces inconvénients en fournissant un attachement polyvalent qui soit capable de se connecter directement à différents types d'instruments dentaires, sans adjonction d'un attachement intermédiaire.

Le but de la présente invention est aussi de fournir un attachement polyvalent capable de venir se connecter à l'arrière d'instruments dentaires normalisés et non normalisés.

Le but de l'invention est de fournir également un instrument dentaire pouvant se connecter avec ce nouvel attachement, et un équipement complet formé de cet attachement et de cet instrument.

A cet effet, la présente a pour objet un attachement polyvalent destiné à connecter différents types d'instruments dentaires, tels qu'une turbine, un raccord de turbine ou un moteur électrique pour contre-angle ou pièce à main, à une source d'alimentation, cet attachement comportant :
- une prise reliée à un tuyau destiné à être connecté à ladite source d'alimentation, cette prise comportant des éléments de connexion femelles comprenant au moins un conduit de transport d'un fluide et/ou au moins un contact électrique, cette prise présentant à son extrémité libre une surface frontale depuis laquelle lesdits éléments femelles sont accessibles pour leur connexion avec des éléments mâles correspondants de l'instrument dentaire sélectionné, et
- un manchon de fixation monté de façon rotative autour de ladite prise, ce manchon comportant un filetage intérieur destiné à assurer une liaison mécanique détachable entre l'attachement et ledit instrument dentaire,
   attachement caractérisé en ce que, d'une part, il comporte au moins un organe adaptateur de longueur qui est agencé pour se monter de façon amovible sur le filetage intérieur dudit manchon, cet organe adaptateur permettant, lorsqu'il est monté sur le manchon, la fixation de l'attachement sur un premier type d'instrument dentaire normalisé, tel que ladite turbine ou ledit raccord de turbine, le filetage intérieur du manchon étant d'autre part agencé en longueur par rapport à la surface frontale de la prise pour permettre de monter l'attachement, en ôtant l'organe adaptateur, sur un deuxième type d'instrument dentaire, tel que le moteur électrique pour contre-angle ou pièce à main.

On précisera aussi que l'organe adaptateur est constitué par une douille rapportée comportant, à une première extrémité, un filetage extérieur destiné à venir se visser sur le filetage intérieur du manchon, et, à une deuxième extrémité, un filetage intérieur destiné à venir se visser sur un filetage extérieur du premier type d'instrument dentaire.

La présente invention a également pour objet un instrument dentaire, tel qu'un moteur électrique pour contre-angle ou pièce à main prévu pour venir se connecter sur un attachement susmentionné, et comportant :
- des éléments de connexion mâles comprenant au moins un conduit d'alimentation d'un fluide et/ou au moins un contact électrique faisant saillie d'une surface frontale arrière dudit instrument, et
- un filetage extérieur formé sur le pourtour d'une paroi arrière de l'instrument pour assurer une liaison mécanique détachable entre le manchon de fixation de l'attachement et cet instrument,
   caractérisé en ce que la paroi arrière qui supporte le filetage extérieur fait saillie de ladite surface frontale, au moins partiellement au-dessus des éléments de connexion pour déporter ces éléments en retrait sous ce filetage et limiter la longueur totale de l'instrument.

Enfin, l'invention a aussi pour objet un équipement dentaire comportant, d'une part, un attachement, et, d'autre part, un instrument conformes respectivement à ceux susmentionnés.

D'autres caractéristiques et avantages de l'invention apparaîtront à la lecture de la description détaillée qui suit, faite en référence aux dessins annexés qui sont donnés uniquement à titre d'exemple, et dans lesquels :
- la figure 1 est une vue de côté d'un équipement dentaire classique comportant une turbine, un raccord tournant et un attachement de conception classique,
- la figure 2 est une vue partielle en coupe d'un dispositif de connexion classique normalisé répondant à la norme ISO 9168, représentant, d'une part, l'arrière d'un raccord tournant d'une turbine avec ses éléments de connexion mâles, et, d'autre part, l'extrémité libre d'un attachement muni de son manchon de fixation et de ses éléments de connexion femelles,
- la figure 3 est une vue en perspective éclatée d'un attachement selon l'invention, dans sa première configuration, destinée notamment au raccordement sur un raccord normalisé d'une turbine, l'extrémité filetée du manchon de cet attachement étant représentée partiellement en coupe,
- la figure 4 est une vue en perspective de l'attachement, du raccord tournant et de la turbine assemblés, une partie de cette figure qui est agrandie étant représentée en coupe et de façon schématique pour mieux comprendre le montage desdits éléments,
- la figure 5 est une vue en perspective similaire à la figure 3 mais représentant l'attachement selon l'invention dans sa deuxième configuration, c'est-à-dire pour son raccordement à l'arrière d'un instrument dentaire formé d'un moteur électrique incorporant les caractéristiques de la présente invention et destiné à venir se connecter dans cet exemple sur un contre-angle, et
- la figure 6 est une vue en perspective représentant l'ensemble de la figure 5 en configuration assemblée (à l'exception du contre-angle), une partie de cet ensemble qui est agrandie étant présenté en coupe pour comprendre le montage des éléments de cet ensemble.

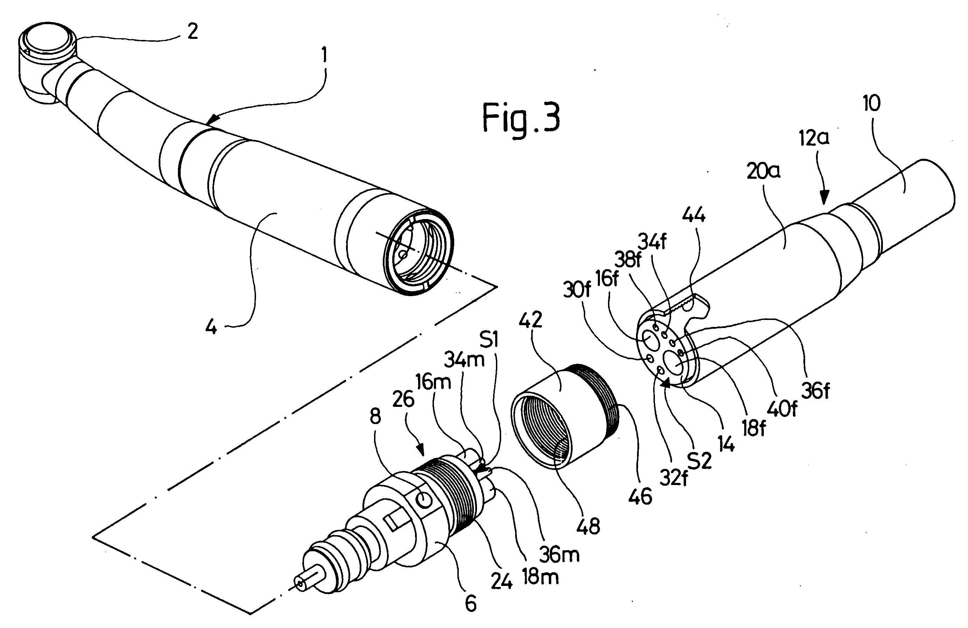

En se référant désormais à la figure 3, on décrira ci-après un attachement polyvalent selon l'invention, repéré ici par la référence générale 12a.

La figure 3 représente également, vue depuis l'arrière de son manche 4 une turbine 1 comportant une tête 2.

Cette turbine 1 étant de conception classique, elle ne sera pas décrite ici de façon plus détaillée.

On voit de plus sur cette figure, un raccord tournant 6 qui est identique au raccord 6 décrit et représenté en rapport avec les figures 1 et 2.

Les différents éléments de la figure 3 ont été représentés dans une position éclatée dans laquelle ils sont destinés à venir s'assembler.

Les parties qui sont communes aux raccords et à l'attachement des figures 1, 2, 3 et 4 portent les mêmes références numériques, afin de simplifier la description qui suit.

On précisera toutefois que la prise 14 de l'attachement 12a comporte, comme décrit dans le brevet CH 676 081, deux conduits de transport de fluide référencés respectivement 30f et 32f, destinés, pour le premier, à l'amenée d'un liquide de pulvérisation, et, pour le second, à l'amenée d'un gaz permettant la pulvérisation du liquide et/ou le séchage d'une zone de travail. Ces deux conduits de transport de fluide sont ménagés sous les deux autres conduits 16f et 18f destinés respectivement à l'alimentation du gaz moteur et à l'évacuation d'un gaz d'échappement.

De plus, la prise 14 comporte deux contacts électriques 34f et 36f destinés à l'alimentation d'une ampoule, incorporée ou non dans ce type de turbine.

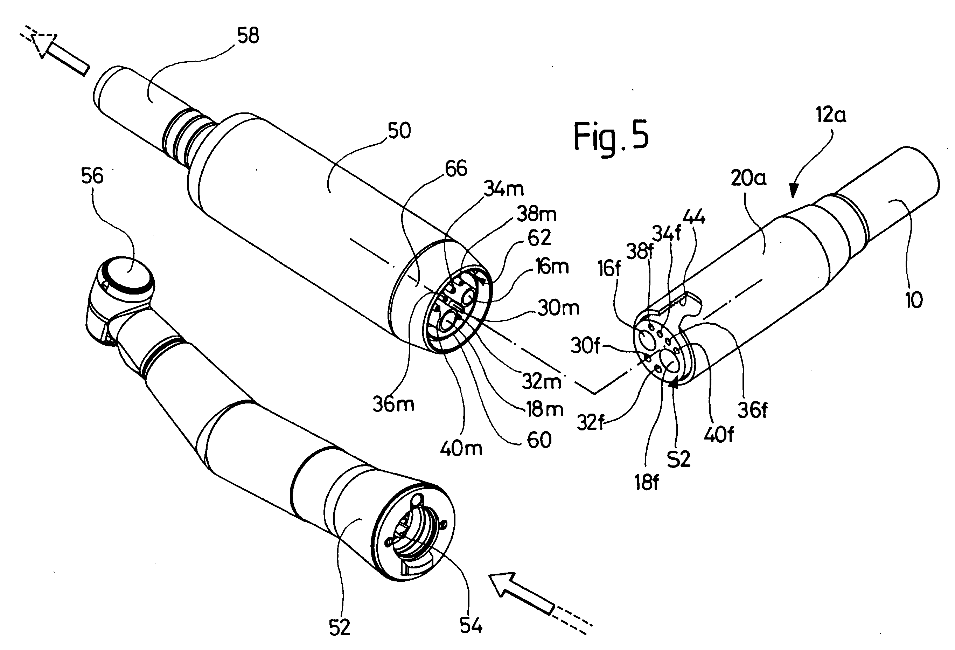

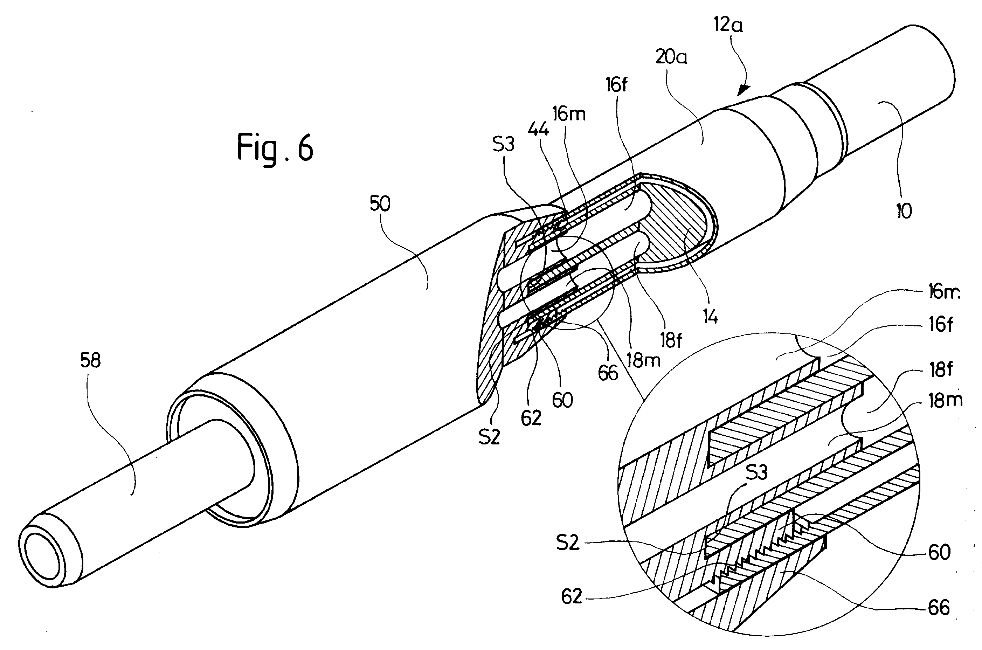

Enfin, la prise 14 comporte deux autres contacts électriques 38f et 40f destinés à l'alimentation du moteur des figures 5 et 6.

Bien que l'on ait représenté une prise 14 comportant quatre conduits de transport de fluide et quatre contacts électriques, l'invention s'applique également à un agencement ne comportant qu'un seul conduit de transport de fluide et/ou un seul contact électrique ou comportant un nombre de conduits et/ou de contacts inférieur ou supérieur à quatre.

On a également représenté à la figure 3 la surface frontale S2 de la prise 14 depuis laquelle les éléments femelles de connexion sont accessibles pour leur connexion avec les éléments mâles correspondants (dont uniquement quatre, 16m, 18m, 34m et 36m ont été représentés) appartenant à l'instrument dentaire sélectionné, en particulier, le raccord 6.

On précisera également que l'on entend dans la présente demande sous le terme "instrument dentaire" aussi bien les composants seuls tels que le raccord tournant 6 ou une turbine à raccord fixe non représentée, que l'ensemble formé de la turbine 1 et de son raccord 6, ou encore un moteur électrique seul ou assemblé à un contre-angle ou une pièce à main, comme représenté sur les figures 5 et 6.

L'attachement 12a comporte, comme l'attachement classique représenté sur les figures 1 et 2, un manchon de fixation 20a qui est monté tournant autour de la prise 14.

L'attachement selon l'invention comporte un organe adaptateur de longueur 42 qui est agencé pour se monter de façon amovible sur un filetage intérieur 44 du manchon 20a, déporté en retrait par rapport à la surface frontale S2.

Bien que l'invention ici décrite et représentée ne comporte qu'un seul organe adaptateur 42, cette invention pourrait comporter également plusieurs organes adaptateurs de différentes longueurs.

Plus particulièrement, cet organe adaptateur 42 est constitué par une douille rapportée qui comporte, à une première extrémité, un filetage extérieur 46 qui est destiné à venir se visser sur le filetage intérieur 44 du manchon 20a.

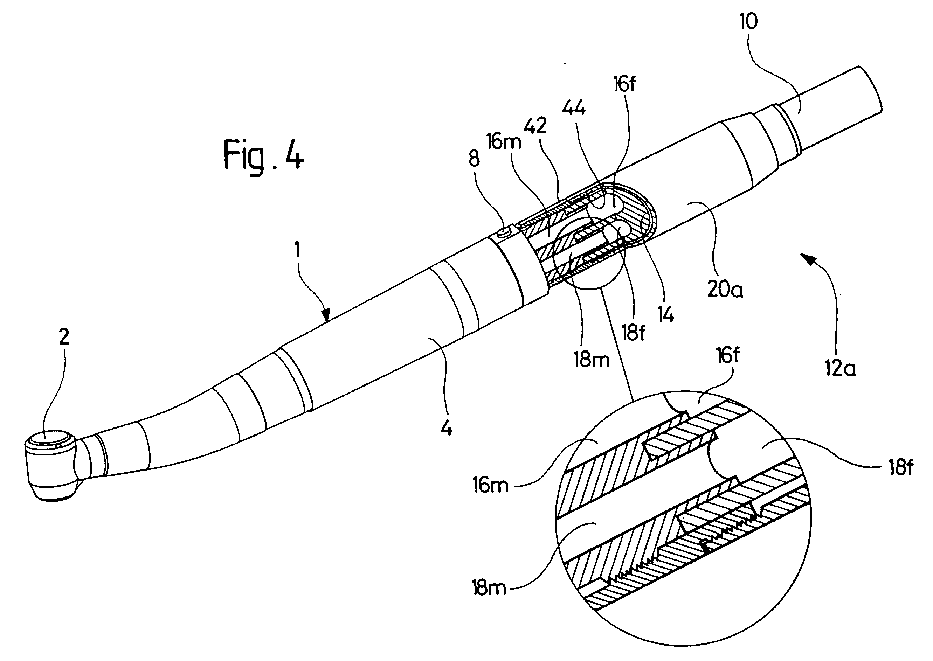

Comme on le voit très clairement aux figures 3 et 4, cet organe adaptateur 42 qui est formé par la douille rapportée comporte en outre, à une deuxième extrémité, un filetage intérieur 48 qui est destiné quant à lui à venir se visser sur le filetage extérieur 24 de l'arrière du raccord normalisé 6 qui forme la partie mâle du dispositif de connexion représenté, ce raccord 6 formant ici un premier type d'instrument dentaire, répondant à la norme ISO 9168 de la figure 2.

Comme on le voit aussi très clairement aux figures 3 et 4, la prise 14, et plus particulièrement sa surface frontale S2, sort de l'extrémité libre du manchon 20a, si bien que le filetage intérieur 44 du manchon 20a s'étend en retrait de la surface frontale de la prise S2, vers l'arrière de celle-ci, c'est-à-dire vers la partie fixe de l'attachement, reliée à la source d'alimentation, non représentée.

En se rapportant désormais aux figures 5 et 6, on comprendra pourquoi le filetage intérieur 44 du manchon 20a a été adapté en longueur par rapport au manchon 20 des figures 1 et 2 pour s'étendre en retrait de la surface frontale de la prise S2.

En effet, comme on le voit sur les figures 5 et 6, l'attachement selon l'invention, conformément à une deuxième configuration, peut venir se monter en l'absence de la douille 42 sur un deuxième type d'instrument dentaire non normalisé constitué ici par un moteur électrique 50, destiné à être branché par exemple sur un contre-angle 52 ou sur une pièce à main, ici non représentée.

Les caractéristiques du contre-angle 52 et du moteur 50 à l'exception des dispositifs de connexion arrière du moteur 50 sont classiques et ne seront par conséquent pas décrites ici de façon plus détaillée.

On précisera simplement que le contre-angle 52 comporte un arbre d'entraînement mécanique 54 qui s'étend à l'intérieur de ce contre-angle pour venir, par un système de roue dentée de forme spécifique, entraîné un outil, non représenté, engagé dans une tête 56.

Le moteur 50, quant à lui, présente un embout 58 destiné à venir se connecter à l'arrière du contre-angle 52 pour assurer la connexion des deux composants.

La prise 14 qui est représentée à la figure 5 est exactement la même que celle représentée à la figure 3, et il en va de même pour le manchon 20a. En outre, la disposition des éléments de connexion mâles de l'arrière du moteur électrique 50 est en tout point identique à celle des éléments de connexion mâles de l'arrière du raccord 6. L'arrière du moteur électrique 50 étant toutefois représenté sous un autre angle que l'arrière du raccord tournant 6, on peut voir sur la figure 5 davantage d'éléments de connexion mâles, tels que par exemple, en plus des conduits de transport de fluide 16m et 18m, quatre contacts électriques référencés respectivement 34m à 40m destinés à venir s'engager dans les éléments correspondants 34f à 40f.

L'arrière du moteur électrique 50 qui constitue, seul ou avec le contre-angle 52, le deuxième type d'instrument dentaire à connecter sur l'attachement 12a selon l'invention, a comme particularité, comme on le voit clairement à la figure 6, de présenter une paroi arrière 60 qui supporte un filetage extérieur 62 et qui fait saillie d'une surface frontale S3, contre laquelle la surface frontale S2 de la prise 14 est destinée à venir abouter de façon étanche, avec interposition d'un joint d'étanchéité, ici non représenté.

On constate en effet que la paroi arrière 60 fait saillie de la surface frontale d'aboutement S3, au moins partiellement au-dessus des éléments de connexion mâles, dont uniquement deux référencés 16m et 18m sont ici représentés. Ces éléments de connexion mâle sont donc déportés en retrait sous le filetage 62, ce qui limite ainsi la longueur totale de l'instrument.

En effet, comme on le voit sur la figure 6, le filetage intérieur 44 de l'extrémité libre du manchon 20a est destiné à venir en prise avec le filetage 62 de la paroi en saillie 60 grâce l'agencement en longueur du manchon 20a, par rapport à la surface frontale S2 de la prise 14.

Ainsi, en utilisant l'organe adaptateur formé par la douille rapportée 42, le praticien peut, dans une première configuration, assurer facilement la fixation de l'attachement 12a sur un premier type normalisé d'instrument dentaire, notamment une turbine ou un raccord de turbine, tandis qu'en ôtant la douille 42, ce praticien peut tout aussi aisément assurer la fixation de cet attachement sur un deuxième type non normalisé d'instrument dentaire, tel que le moteur électrique 50.

Ainsi, avec une solution extrêmement simple qui est la disposition de cette douille rapportée 42 et l'adaptation correspondante de la longueur du manchon 20a par rapport à la prise 14, on a pu assurer la connexion et la fixation d'un attachement "dissocié" restant essentiellement normalisé, d'une part, à l'arrière d'un premier type d'instrument dentaire normalisé, et, d'autre part, à l'arrière d'un deuxième type d'instrument dentaire, non normalisé, instrument dont la longueur n'a pas été augmentée, cela grâce au retranchement des éléments de connexion mâles sous une paroi en saillie, en forme de toit, recouvrant ses éléments de connexion.

On précisera ici aussi que l'instrument selon l'invention, et plus particulièrement le moteur électrique 50 comporte une deuxième paroi 66 qui est concentrique à la première 60 et qui l'enveloppe en faisant saillie de celle-ci pour recouvrir intégralement les éléments de connexion et les protéger.

Bien que l'on ait ici décrit un attachement dont la prise 14 est fixe par rapport au tuyau 10, l'invention s'applique également à un attachement tournant dans lequel la prise 14 peut tourner libre en rotation par rapport au tuyau 10.

## Revendications

1. Attachement polyvalent destiné à connecter différents types d'instruments dentaires, tels qu'une turbine, un raccord de turbine ou un moteur électrique pour contre-angle ou pièce à main, à une source d'alimentation, cet attachement comportant :
- une prise (14) reliée à un tuyau (10) destiné à être connecté à ladite source d'alimentation , cette prise comportant des éléments de connexion femelles comprenant au moins un conduit (16f, 18f, 30f et 32f) de transport d'un fluide et/ou au moins un contact électrique (34f à 40f), cette prise (14) présentant à son extrémité libre une surface frontale (S2) depuis laquelle lesdits éléments femelles sont accessibles pour leur connexion avec des éléments mâles correspondants (16m, 18m, 30m à 40m) de l'instrument dentaire sélectionné, et
- un manchon de fixation (20a) monté de façon rotative autour de ladite prise (14), ce manchon (20a) comportant un filetage intérieur destiné à assurer une liaison mécanique détachable entre l'attachement et ledit instrument dentaire,
attachement caractérisé en ce que, d'une part, il comporte au moins un organe adaptateur de longueur (42) qui est agencé pour se monter de façon amovible sur le filetage intérieur (44) dudit manchon (20a), cet organe adaptateur (42) permettant, lorsqu'il est monté sur le manchon (20a), la fixation de l'attachement (12a) sur un premier type d'instrument dentaire normalisé (6), tel que ladite turbine ou ledit raccord de turbine, le filetage intérieur (44) du manchon (20a) étant d'autre part deporté en retrait par rapport à la surface frontale (S2) de la prise (14) pour permettre de monter l'attachement (12a), en ôtant l'organe adaptateur (42), sur un deuxième type d'instrument dentaire (50), tel que le moteur électrique pour contre-angle ou pièce à main.

2. Attachement selon la revendication 1, caractérisé en ce que l'organe adaptateur est constitué par une douille rapportée (42) comportant, à une première extrémité, un filetage extérieur (46) destiné à venir se visser sur le filetage intérieur (44) du manchon (20a), et, à une deuxième extrémité, un filetage intérieur (48) destiné à venir se visser sur un filetage extérieur (24) du premier type d'instrument dentaire (6).

3. Attachement selon la revendication 1 ou 2, caractérisé en ce que le filetage intérieur (44) du manchon (20a) s'étend en retrait de la surface frontale (S2) de la prise (14), vers l'arrière de celle-ci, pour pouvoir venir se visser sur un filetage extérieur (62) du deuxième type d'instrument (50), formé sur une paroi en saillie (60) recouvrant au moins en partie les éléments de connexion mâles de cet instrument.

4. Instrument dentaire, tel qu'un moteur électrique pour contre-angle ou pièce à main prévu pour venir se connecter sur un attachement selon l'une des revendications 1 à 3, et comportant :
- des éléments de connexion mâles (16m, 18m et 30m à 40m) comprenant au moins un conduit d'alimentation d'un fluide et/ou au moins un contact électrique faisant saillie d'une surface frontale arrière (S3) dudit instrument, et
- un filetage extérieur (62) formé sur le pourtour d'une paroi arrière (60) de l'instrument pour assurer une liaison mécanique détachable entre le manchon de fixation (20a) de l'attachement (12a) et cet instrument, caractérisé en ce que la paroi arrière (60) qui supporte le filetage extérieur (62) fait saillie de ladite surface frontale (S3), au moins partiellement au-dessus des éléments de connexion pour déporter ces éléments en retrait sous ce filetage (62) et limiter la longueur totale de l'instrument.

5. Instrument selon la revendication 4, caractérisé en ce qu'il comporte une deuxième paroi (66) qui est concentrique à la première (60) et qui l'enveloppe en faisant saillie de celle-ci pour recouvrir intégralement les éléments de connexion et les protéger.

6. Equipement dentaire comportant un attachement selon l'une des revendications 1 à 3 et un instrument selon la revendication 4 ou 5.

## Claims

1. A multi-purpose attachment for connecting different types of dental instruments, such as a turbine, a turbine connector or an electric motor for an angle-piece or hand-piece, to a supply source, the attachment comprising:
- a socket (14) connected to a tube (10) for connection to the said supply source, this socket comprising female connector elements having at least one passage (16f, 18f, 30f and 32f) for carrying a fluid and/or at least one electrical contact (34f to 40f), this socket (14) having a front surface (S2) at its free end from which the said female elements are accessible for connection to corresponding male elements (16m, 18m, 30m to 40m) of the selected dental instrument, and
- a fixing sleeve (20a) rotated in rotatable manner about the said socket (14), this sleeve (20a) having an internal thread for effecting a detachable mechanical connection between the attachment and the said dental instrument,
the attachment being characterized in that, on the one hand, it comprises at least one length adapter member (42) which is arranged for mounting removably on the internal thread (44) of the said sleeve (20a), this adapter member (42), when it is mounted on the sleeve (20a), allowing fixing of the attachment (12a) on a first type of standardised dental instrument (6), such as the said turbine or the said turbine connector, the internal thread (44) of the said sleeve (20a) being on the other hand set back relative to the front surface (S2) of the socket (14) to allow the attachment (12a) to be mounted without the adapter member (42) on a second type of dental instrument (50), such as the electric motor for an angle-piece or hand-piece.

2. An attachment according to claim 1, characterized in that the adapter member is formed by an accessory bush (42) having an external thread (46) at a first end for screwing into the internal thread (44) of the sleeve (20a), and an internal thread (48) at a second end, for screwing on to an external thread (24) of the first type of dental instrument (6).

3. An attachment according to claim 1 or 2, characterized in that the internal thread (44) of the sleeve (20a) is set back from the front surface (S2) of the socket (14) towards the rear thereof, so as to be able to screw on to an external thread (62) of the second type of instrument (50), formed on a projecting wall (60) covering at least part of the male connecting elements of this instrument.

4. A dental instrument, such as an electric motor for an angle-piece or hand-piece for connection to an attachment according to any of claims 1 to 3, comprising:
- male connecting elements (16m, 18m and 30m to 40m) comprising at least one supply passage for a fluid and/or at least one electrical contact projecting from a rear face surface (S3) of the said instrument, and
- an external thread (62) formed on the periphery of a rear wall (60) of the instrument for effecting a detachable mechanical connection between the fixing sleeve (20a) of the attachment (12a) and this instrument,
characterized in that the rear wall (60) which carries the external thread (62) projects from the said face surface (S3) at least partially beyond connecting elements to set these elements back behind the thread (62) and to limit the overall length of the instrument.

5. An instrument according to claim 4, characterized in that it comprises a second wall (66) which is concentric with the first (60) and which surrounds it, projecting therefrom to cover and protect the connecting elements integrally.

6. Dental equipment comprising an attachment according to any of claims 1 to 3 and an instrument according to claim 4 or 5.

## Patentansprüche

1. Mehrzweck-Anschlußstück, bestimmt zum Verbinden verschiedener Arten von zahnärztlichen Instrumenten, wie einer Turbine, eines Turbinenverbinders oder eines Elektromotors für Winkel- oder Handstück, mit einer Versorgungsquelle, welches Anschlußstück umfaßt:
- eine Dose (14), verbunden mit einem Schlauch (10), der für den Anschluß an die Versorgungsquelle bestimmt ist, welche Dose Aufnahmeanschlußelemente mit mindestens einer Leitung (16f, 18f, 30f und 32f) für den Transport eines Fluides und/oder mindestens einen elektrischen Kontakt (34f bis 40f) umfaßt, wobei diese Dose (14) an ihrem freien Ende eine Stirnfläche (S2) aufweist, von der aus die Aufnahmeelemente für die Verbindung mit entsprechenden Einsteckelementen (16m, 18m, 30m bis 40m) des gewählten zahnärztlichen Instruments zugänglich sind, und
- eine Befestigungshülse (20a), die drehbeweglich um die Dose (14) montiert ist, welche Hülse (20a) ein Innengewinde umfaßt, das dazu bestimmt ist, eine mechanische lösbare Verbindung zwischen dem Anschlußstück und dem zahnärztlichen Instrument sicherzustellen,
welches Anschlußstück dadurch gekennzeichnet ist, daß es einerseits mindestens ein Längenadapterorgan (42) umfaßt, das ausgebildet ist, um sich lösbar mit dem Innengewinde (44) der Hülse (20a) zu verbinden, welches Adapterorgan (42) es ermöglicht, wenn es auf der Hülse (20a) montiert ist, das Anschlußstück (12a) an einem ersten standardisierten zahnärztlichen Instrumententyp (6), wie der Turbine oder der Turbinenverbindung, zu befestigen, wobei das Innengewinde (44) der Hülse (20a) andererseits relativ zur Stirnfläche (S2) der Dose (14) zurückgesetzt ist, um das Anschlußstück (12a) unter Weglassen des Adapterorgans (42) an einem zweiten Typ eines zahnärztliches Instruments (50) zu montieren, wie dem Elektromotor für ein Winkel- oder Handstück.

2. Anschlußstück nach Anspruch 1, dadurch gekennzeichnet, daß das Adapterorgan von einer angesetzten Manschette (42) gebildet ist, die an einem ersten Ende ein Außengewinde (46) umfaßt, bestimmt zum Einschrauben in das Innengewinde (44) der Hülse (20a), und an einem zweiten Ende ein Innengewinde (48), bestimmt zum Aufschrauben auf ein Außengewinde (24) des ersten Typs von zahnärztlichem Instrument (6).

3. Anschlußstück nach Anspruch 1 oder 2, dadurch gekennzeichnet, daß das Innengewinde (44) der Hülse (20a) sich hinter der Stirnfläche (S2) der Dose (14) nach hinten bezüglich derselben erstreckt, um auf ein Außengewinde (62) des zweiten Typs von Instrument (50) aufgeschraubt zu werden, ausgebildet auf einer vorspringenden Wandung (60), welche mindestens teilweise die Einsteckverbindungselemente dieses Instruments abdeckt.

4. Zahnärztliches Instrument, wie Elektromotor für Winkel-oder Handstück, vorgesehen für den Anschluß an ein Anschlußstück gemäß einem der Ansprüche 1 bis 7, und umfassend:
- Einsteckverbindungselemente (16m, 18m und 30m bis 40m), umfassend mindestens eine Fluidspeiseleitung und/oder mindestens einen elektrischen Kontakt, welche von einer hinteren Stirnfläche (S3) des Instruments vorstehen, und ein Außengewinde (62), ausgebildet auf dem Umfang einer hinteren Wandung (60) des Instrumentes, um eine mechanische lösbare Verbindung zwischen der Befestigungshülse (20a) des Anschlußstücks (12a) und diesem Instrument zu ermöglichen,
dadurch gekennzeichnet, daß die hintere Wandung (60), welche das Außengewinde (62) trägt, von der Stirnfläche (S3) mindestens teilweise über die Anschlußelemente vorspringt, um diese Elemente hinter dieses Gewinde (62) zu verlagern und die Gesamtlänge des Instruments zu begrenzen.

5. Instrument nach Anspruch 4, dadurch gekennzeichnet, daß es eine zweite Wandung (66) umfaßt, die konzentrisch zur ersten (60) ist und diese vorspringend umschließt, um integral die Anschlußelemente abzudecken und zu schützen.

6. Zahnärztliche Ausrüstung, umfassend ein Anschlußstück nach einem der Ansprüche 1 bis 3 und ein Instrument nach Anspruch 4 oder 5.
